# EUROPEAN PATENT SPECIFICATION

(11) **EP 2 479 637 B1**
(45) Date of publication and mention of the grant of the patent: **17.12.2014**
(21) Application number: 12164709.3
(22) Date of filing: 05.03.2008
(51) Int. Cl.: G06F 1/16

(54) **A display unit, a method and a computer program product**
Anzeigeeinheit, Verfahren und Computerprogrammprodukt
Unité d'affichage, procédé et produit de programme informatique

(30) Priority: 06.03.2007 US 893293 P; 06.03.2007 EP 07103630
(43) Date of publication of application: 25.07.2012
(62) Divisional of application: 08723878.8
(73) Proprietor: Creator Technology B.V., 4837 BN Breda (NL)
(72) Inventor: Huitema, Hjalmar Edzer Ayco, 5501 CK Veldhoven (NL); Van Lieshout, Petrus Johannes Gerardus, 5741 EA Beek En Donk (NL); Hamers, Johannes Cornelis Adriaan, 5694 CK Breugel (NL)
(74) Representative: Goddar, Heinz J.

(56) References cited:
- EP-A1- 1 152 319
- EP-A1- 1 511 275
- WO-A2-2006/085271
- WO-A2-2006/123297

## Description

The invention reflates to a display unit comprising a flexible display having a depicting side for depicting visual information, the flexible display being deformable between a storage state wherein the flexible display is in a deformed position, and a depicting state wherein the depicting side of the flexible display is substantially flat, is visible from an exterior point of view and it is possible to control the visual information content on the depicting side.

WO 2005 02019 describes a retractable flexible digital display apparatus wherein a flexible digital display is retractable into a portable housing. A display size calibration sensor allows the width of the flexible display assembly, when partially retracted, to be calculated so that the position of a radio frequency transmitter pen can be sensed relative to the partially retracted flexible display assembly.

EP 107 101 A2 describes a flat display of a mobile phone or the like, the display being covered by a touch sensitive slide. Slide position sensing can be used to coordinate and determine the partial or full display of information on the display depending on the position of the slide in relation to the housing.

Patent publication WO 2006/061786 discloses a flexible display on which visual information, e.g. e-mail messages, can be depicted. The display can be deformed between two states, viz. the depicting state for reading the display and the storage state for storing the display. In the depicting state the depicting side of the display is substantially flat, is visible from an exterior point of view with respect to the display unit and it is possible to control the content of the depicting side, so that a user can read information that is depicted on the display. In the storage state, the flexible display has been deformed to a compact volume, e.g. by rolling or wrapping the display and can be protected against external mechanical influences. If the depicting side of the flexible display is substantially inwardly oriented, in the storage state, that side is invisible from the exterior point of view.

However, for viewing information, shown by the display unit on an active way, the flexible display has to be deformed from the storage state to the depicting state which is not convenient for a user who wants to regularly check information of the display unit, such as status information of a device or whether new messages have been received by a mobile device.

It is an object of the invention to provided a display unit according to the preamble wherein a user can more readily check information of the display.

The object is achieved according to the present invention by a display unit as defined in independent claim 1, a method as defined in independent claim 12 and a computer program product as defined in independent claim 15. Advantageous embodiments are defined in dependent claims.

According to a first aspect of the invention, there is provided a display unit comprising a flexible display having a depicting side for depicting visual information, the flexible display being deformable between a storage state wherein the flexible display is in a deformed position and a depicting state wherein the depicting side of the flexible display is substantially flat, visible from an exterior point of view and it is possible to control the visual information content on the depicting side, the unit further comprising a projector for at least partially projecting the depicting side of the flexible display to a substantially transparent part of the display unit that is visible from the exterior point of view.

The invention is based on the inventive insight to depict information on a depicting side of the flexible display that is visible from the exterior point of view when the flexible display is not in the depicting state, so that a user of the display unit according to the invention does not need to deform the flexible display from the storage state entirely to the depicting state, thereby saving time for deforming the display. The user can thus have in a convenient way a fast view on information of the display unit though the flexible display is not in the depicting state. Further, the life time of the display unit is lengthened, as the number of actions to deformation the flexible display towards the depicting state is reduced.

According to the first aspect of the invention, the display unit further comprises a projector for at least partially projecting the depicting side of the flexible display to a substantially transparent part of the display unit that is visible from the exterior point of view, By introducing the substantially transparent part of the display unit and the projector, visible information can advantageously be shown to a user, even when the flexible display is not in the depicting state, but in another state, such as the storage state or the at least one additional state . By projecting the visible information on the substantially transparent part, a user does not need to deform the flexible display at all, e.g. for a fast information view, thereby further improving an information check performance of the display unit. As overall less deformation actions of the flexible display have to be performed, also the life time of the display unit further extends. In addition, a yet further display that is always visible is not requited anymore.

According to a second aspect of the invention, there is provided a method of depicting information on a depicting side of a flexible display of a display unit, the flexible display being deformable between a storage state wherein the depicting side of the flexible display is in a deformed position, and a depicting state wherein the depicting side .of the flexible display is substantially flat, visible from an exterior point of view and it is possible to control the visual information content on the depicting side, the method comprising the step of at least partially projecting the depicting side of the flexible display to a substantially transparent part of the display unit that is visible from the exterior point of view.

According to a third aspect of the invention, there is provided a computer program product comprising computer readable code causing a computer to perform a method of depicting information on a depicting side of a flexible display of a display unit, the flexible display being deformable between a storage state wherein the flexible display is in a deformed position, and a depicting state wherein the depicting side of the flexible display is substantially flat, visible from an exterior point of view and it is possible to control the visual information content on the depicting side, the method comprising the step of at least partially projecting the depicting side of the flexible display to a substantially transparent part of the display unit that is visible from the exterior point of view,

In order that the invention may be more fully understood, embodiments thereof will now be described by way of example only, with reference to the figures in which:
Figure 1 shows a schematic perspective view of a first embodiment of a display unit according to the invention;
Figure 2 shows a schematic perspective view of a second embodiment of a display unit according to the invention;
Figure 3a shows a simplified schematic plan view of the display unit of Figure 2 in a storage state;
Figure 3b shows a simplifies schematic plan view of the display unit of Figure 2 in an intermediate state;
Figure 3c shows a simplified schematic plan view of the display unit of Figure 2 in a depicting state;
Figure 4 shows a further schematic plan view of the display unit of Figure 3b;
Figure 5 shows a yet further schematic plan view of the display unit of Figure 3b;
Figure 6 shows a further schematic plan view of the display unit of Figure 3b;
Figure 7a shows a cross sectional side view of a further embodiment of the display unit according to the invention;
Figure 7b shows a top view of the display unit of Figure 7a; and
Figure 7c shows a cross sections side view of a further embodiment of the display unit according to the invention,

The figures are merely schematic views of preferred embodiments according to an embodiment of the invention. In the figures, the same reference numbers refer to equal or corresponding parts.

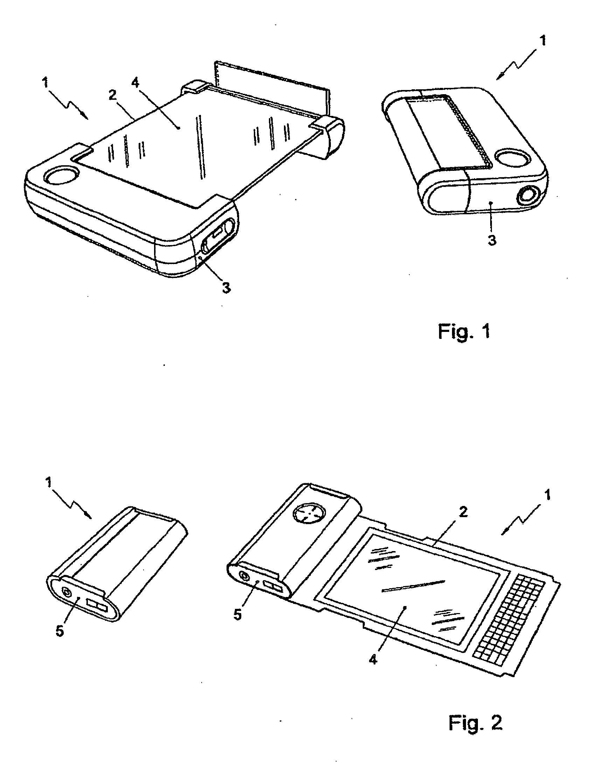

Figure 1 shows a schematic perspective view of a first embodiment of a display unit 1 according to the invention having a flexible display 2 that is reliable around a cylinder that is arranged inside a housing 3 of the display unit 1, On the left hand side, a depicting state of the flexible display 2 is shown wherein a depicting side 4 of the display is substantially flat, visible from an exterior point of view with respect to the display unit 1 and the visual information, content on the depicting side is controlled by a display controller (not shown). In the depicting state of the flexible display 2, the display 2 is substantially flat e.g. supported by one or more telescoping supporters. On the right hand side, a storage state is shown wherein the display 2 is deformed, in this embodiment substantially entirely rolled around the cylinder, so that the depicting side of the flexible display is substantially inwardly oriented and thus invisible from the exterior point of view. Normally, in the storage, inoperative state, the unit 1 is switched off or in a stand by modus.

It is noted that the flexible display 2 can also be implemented reliable otherwise, e.g. around an external cylinder. It is further noted that with the expression 'inwardly oriented' is meant that the normal vector of the surface points to the interior of the display unit. Finally, it is noted that on alternative way the flexible display can be rolled with the depicting side substantially outwardly oriented.

Figure 2 shows a schematic perspective view of a second embodiment of a display unit 1 according to the invention having a flexible display 2 that is wrappable with respect to a kernel 5 of the unit 1. On the right hand side, the unit 1 is shown in the depicting state of the flexible display 2, while on the left hand side, the unit 1 is shown in, the storage state of the flexible display 2. In the depicting state of the flexible display 2, the display 2 is substantially fiat e.g. supported by one or more pivoting supporters.

The display unit 1 shown in Figures 1 and 2 can be used in mobile devices, such as mobile telephones, PDA's etc. The flexible display 2 comprises e.g. an electrophoretic display, also known as E Ink which is a trademark of E Ink Corporation, Cambridge, USA. Electrophoretic displays are knows from the prior art, e.g. from patent publication US.2007/0018944 A1.

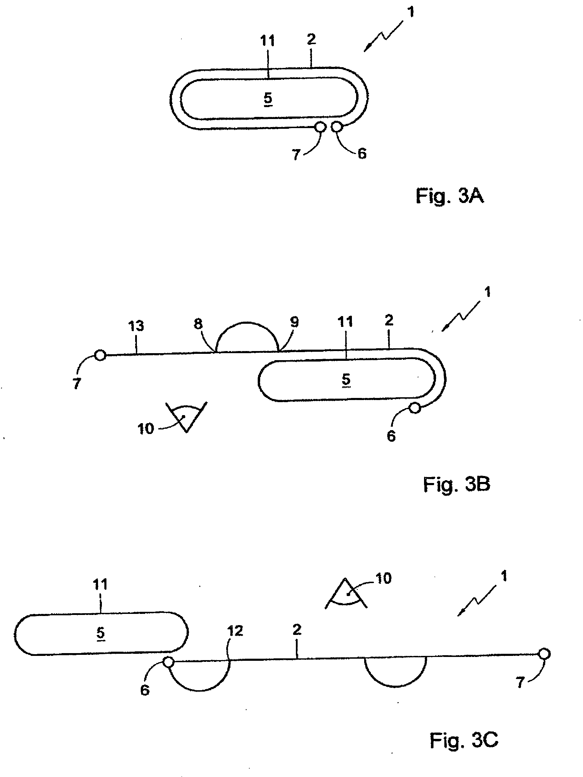

Figure 3a, sub, 3c show a simplified schematic plan view of the display unit 1 of Figure 2 in the storage state, the depicting state, and an additional state, also called an intermediate state, respectively, of the flexible display 2, The flexible display 2 is of the wrappable type. In the storage state, the depicting side 4 of the flexible display 2 is oriented inwardly towards the kernel 5 of the display unit 1 and thereby invisible from an exterior point of view. The kernel is provided with a user interface 11. The flexible display 2 having a first end 6 and a second end 7 makes a complete turn around the kernel 5. In principle, however, the display 2 may also enclose the kernel 5 twice or more. Further, the display 2 may surround the kernel 5 partially.

In the intermediate state, shown in Figure 3b, the flexible display 2 is deformed from the storage state by a partial unwrapping action. In particular, a first curve section between curve end points 8 and 9 has been flattened. The first curve section serves as a first hinge. Thereby, in the intermediate state, a depicting side of a section 13 of the display 2 adjacent to the second end is flat, visible from a point of view 10 exterior to the display unit 1 and visual information content is controlled by a display controller (not shown). In principle, more than one additional intermediate state of the flexible display 2 can be provided. In the intermediate state of the flexible display, a part of the display depicting side can be seen from an exterior point of view. Said visible display part can be provided with visual information content by controlling the display by means of the controller. In the intermediate state, one or more sections of the flexible display that are oriented outwardly, away from the kernel, are generally visible from the exterior point of view. Visual information, content can be provided on a visible part of the display by selecting and addressing the corresponding pixels in said visible part.

In the depicting state, shown in Figure 3c, the flexible display 2 is further deformed by an additional unwrapping action. In particular, a second curve section between a curve end point 12 and the first end of the flexible display 2 has been flattened, so that substantially the entire depicting side of the flexible display 2 is flat, visible from the exterior point 10 and visual information content is controlled by the display controller. Here, the second curve section serves as a second hinge.

Preferably, the display unit 1 is arranged such that the flexible display 2 is more or less secured in the intermediate state to provide a stable mechanical state of the unit 1. Thereto, the unit further comprises a stabilizer for enabling a stable mechanical position of the flexible display after deformation to the at least one additional operating state. It is noted that a corresponding reliable display can also be arranged such that the intermediate state is more or less stable, e.g. by providing more or less telescoping supporters having an intermediate stable position.

The additional state is for use in crowded environments and for having a good grip on the unit 1, Possible applications, that can be used in the intermediate, partial unwrapped state, are consulting sms and/or e-mail messages, phone contact list, and mp3 play list and volume control,

The display 2 comprises rigid and flexible sections to facilitate deformation of the display 2. In particular, the curved sections of the flexible display 2 in Figure 3A, the hinges, are flexible. However, also flat sections of the display 2 in Figure 3A can be manufactured from flexible display material. Further, the display can be provided with a sequence of hinges and flat sections, arranged in an alternating manner. As such, the display may comprise two hinges wherein a flat section is located between the hinges, or more hinges, e.g. three hinges wherein between subsequent hinges a flat section is located. By flattening some, not all hinges, an intermediate state of the display unit can be obtained. By flattening all hinges, the entire display is unwrapped and brought into the depicting state.

Curve end points 8, 9, 12 are provided with a deformation detector for detecting the deformation of the flexibly display 2 to the at least one additional state and for generating a detecting signal. By providing a deformation detector the state of the flexible display 2 can be determined, especially which depicting side area of the display 2 is visible from the exterior point 10.

Optionally, the display unit further comprised a display processor that is arranged to control visual information adapted for the at least one additional state of the flexible display 2. In particular, the display processor is arranged to control visual information on a substantially flat and visible part of the flexible display 2 from the exterior point 10 in response to a detecting signal of the orientation detector. In this way, the visual information is automatically shown on the visible part of the display 2 after performing the first unwrapping action. Alternatively, the visual information shown on the visible part upon an additional user action, e.g. via a user interface.

It is noted that the process of depicting the visual information can be caused by hardware components and/or by software.

Further, the deformation detectors can be provided with lock and/or unlock functionality or another appropriate user interface action, such as page up/page down, see below.

The deformation detectors can each be implemented in various manners, among others as a:
(i) Hall sensor generating a signal proportional to the distance of magnet to the sensor when the magnet is close enough. The sensor can typically be integrated in the border edge around the display 2;
(ii) potential meter integrated in the curving zones in order to detect the position of the curving zone by a resistance measurement circuit, being an analogue measurement of the curving state of a flexible section and can optionally also be used to detect intermediate states during (un)wrapping actions;
(iii) light sensor detecting if a part of the display is unwrapped, being a typical digital measurement integrated in the border edge of the display;
(iv) pull strip or piezo element, the 'pull strip' changing its resistance depending on the strain (elongating or compressive) exerted on the strip. The strip can be integrated in the curved sections of the display 2. The piezo element works in a similar manner;
(v) reed relais being a digital switch that can be switched by a magnetic field. The reed relais can be integrated in the border edge of the display 2.

As a result, the deformation detector can comprise an electronic measurement sensor and/or a magnetic field sensor.

In Figure 3b, the user interface 11 is still covered by the part of the display 2 that is wrapped and cannot be used. This can be solved by adding limited user interface functionality on the other side of the device body or on the top and/or bottom of the display unit 1. The limited user interface could specifically be designed for operating the display unit in its partially unmapped state, the additional operative state.

In terms of functionality, a simple user interface can be added on the kernel 5 that is brought in the partially unwrapped state. This user interface can be dedicated for use of the partially unwrapped display part. As an example, it can be a simple four-way button that can be used to scroll through item lists on the display.

Further, in terms of functionality, a keyboard can be added. This is in particular advantageous as the unit in its partially unwrapped state is an ideal configuration for typing as the user can hold the unit in this configuration in an easy way in on or both hands. This would make the partially unwrapped state the 'typing mode' of the unit and the completely unwrapped state the 'reading mode'. The applications could be configured in such a way that they automatically switch to the typing mode when the user switches to the partially unwrapped state. For example, when reading e-mail, going the partially unwrapped state automatically triggers the reply action. The same can be done in the sms application. The keyboard can also contain four navigation keys for navigation to an on-screen list of items.

In general, user interface elements can be located on a front and/or back surface of the flexible display, on or opposite to the depicting side, on side sections, on a top and/or on a bottom section of the display unit 1,

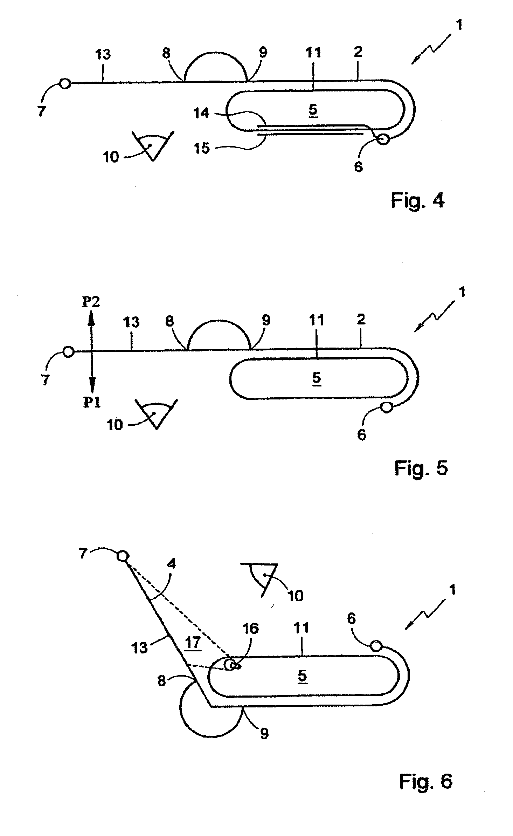

Practically, a user interface can be implemented by adding a display 14 with touch screen 15 to the unwrapped part of the device body, as shown in Figure 4. In this way a reconfigurable user interface can be created that can be configured as a keyboard and/or as navigation keys. One implementation that would be ideal is to use the same display foil both for the wrapping part and for the reconfigurable user interface display part.

As a further option, a wrap / unwrap action can also be used for interacting with the display 2, Especially the partially unwrapped state is ideal for this kind of interaction as only one curved section between curve end points 8, 9 is in principle free to pivot in that state. Moving the free display end 7 towards the wrapped state P1 by a certain number of degrees can, for example, be the page down action; moving the free display end the other way P2 can, for example, be the page up action, as shown in Figure 5. Obviously, the functionality can also be implemented vice versa. Further, other user interface functionality can be implemented. The curved section can be constructed in such a way that flexing up and down is possible, while still having a good stable position in the flat state. The 'overstretch' possibility of the curved section and the display could also be beneficial for the reliability of the unit 1. This is similar to the way in which eyeglasses are constructed.

In the partially unwrapped state, optionally a front light can be used, e.g. for use of the unlit 1 during poor lighting conditions. In Figure 6, such a configuration is shown. The orientation of the free display section 13 is not parallel with the longitudinal axis of the kernel 5, but tilted. Preferably, the curved section between curved end points 8, 9 has an additional stable (clicking) position in the tilted state. The kernel 5 is provided with a light source 16 to illuminate the depicting side 4 of the free display end 13. As an option, the direction of the light beam 17 generated by the light source 16 can be adjusted according to the tilt angle of the free display end 13 with respect to longitudinal axis of the kernel. Here, a potential meter arranged in the curved section between curved end points 8, 9 can be used.

In the intermediate state of the flexible display 2, a part of the depicting side, e.g. half of it, is not externally visible and therefore does not need to be updated by the unit 1. In general, the display comprises matrix pixels that are activated by column and row electrodes. Defending on the orientation, only a part of the column or row electrodes has to be used to show the visual information on the visible part of the display. Preferably, the visible part of the display is operated by a main display control processor, while the non-visible part of the display is operated by a separate display control processor, so that the separate display control processor can be switched off or turned to a zero volt state, thereby saving energy. After deforming the display in the depicting, the separate display control processor can be initialized for normal operation. Further, the amount of data that has to be sent to the display control processors is much less when only a part of the display has to be updated. This will also conserve energy.

It is noted that on alternative way the flexible display 2 can be wrapped with the depicting side substantially outwardly oriented with respect to the kernel 5 of the unit 1 with the same advantages of the additional state.

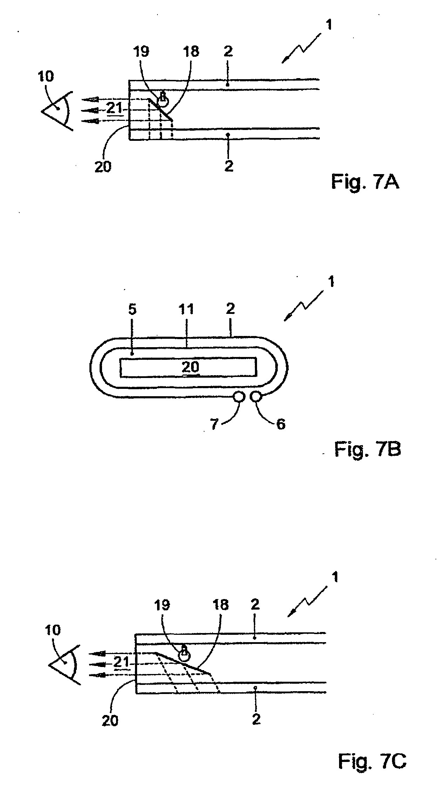

In Figure 7a a cross sectional side view of a further embodiment of the display unit according to the invention is shown. A part of the depicting side of the flexible display is projected at the top and/or the bottom of the device on a substantially transparent part of the display unit 21 that is visible from an exterior point of view. The substantially transparent part of the display unit 21 is implemented as an additional display 20, such as a frosted glass. A light beam 21 is visible from an exterior point of view 10. The projection of the part of the depicting side of the flexible display 2 is performed by a projector comprising a mirror 18. The additional display 20 is oriented substantially transverse with respect to the partially projected depicting side of the flexible display. One of the advantages of this embodiment is that at least part of the depicting side of the flexible display is visible from an exterior point of view 10 when the flexible display 2 is not in the depicting state, e.g. in an intermediate state as described above. Moreover, in a very advantageous way, the display unit can also be arranged such that at least part of the depicting side of the flexible display is visible from an exterior point of view 10, even when the flexible display 2 is in the storage state. Thereby, the lifetime of the display unit is even more extended as the flexible display needs not be deformed for at least a number of viewing actions of a user. Thus, the display unit 1 can also be operative when the flexible display 2 is in its fully wrapped, storage position. Figure 7b shows a top view of the display unit of Figure 7a, clearly illustrating the additional display 20. It is noted that the substantially transparent part of the display unit can also be implemented otherwise, e.g. merely as a transparent element.

Optionally, a light source 19 can be added that creates a front light for the projected part of the display. The light source 19 might generate coloured or substantially white light. In Figure 7a, the light source 19 is located behind the mirror 18 as shown from the exterior point of view 10. It is advantageous in this configuration that the mirror then is transparent for the light coming from the light source 19. In such an embodiment, the mirror is semitransparent, i.e. substantially transparent for light that is incident on a first side of the mirror and substantially reflective for light that is incident on a second side of the mirror. Alternatively, the light source 19 can be positioned in the top of the display unit 1, near the additional display, in Figure 7a on the left-hand side of the mirror 18. In that case the mirror 18 can be transparent, or non-transparent. However, the light source 19 is in the latter case preferably shielded from the exterior point of view 10 in order to prevent light to directly propagate towards the exterior point of view 10. In principle, the light source 19 can also be combined with light sources that are already present for a user feedback in a user interface.

The additional display, that can be used as a preview screen, can be combined with a button functionality by making a button transparent. Alternatively a color filter, touch functionality of any other added feature could be added to the additional display that can be used for previewing actions. Alternatively or additionally with respect to a passive additional display, an active display can be provided for displaying information that is visible from the exterior point of view, e.g. information on a part of the depicting side of the flexible display. The active display can e.g. be arranged for displaying information when the display unit is in the intermediate state wherein a part of the depicting side of the flexible display is substantially flat or when the display unit is in the storage state.

In Figure 7a, the mirror 18 is oriented in a plane intersecting the depicting side of the flexible display 2, i.e. the mirror 18 is oriented at an angle of approximately 45° with respect to the local orientation of the flexible display 2. The mirror 18 then projects a part of the depicting side of the display 2 towards an exterior point of view 10 via the additional display 20. In Figure 7c showing a further embodiment of the display unit 1 according to the invention, the mirror is oriented at an angle smaller than approximately 45° with respect to the local orientation of the flexible display 2, thereby obtaining a projection in the additional display 20 having a higher resolution in one dimension.

It is noted that on alternative way the mirror can be oriented at an angle larger than approximately 45° with respect to the local orientation of the flexible display 2 or the angle can be adjusted by means of a button on the display unit 1, thus enabling a kind of zoom function.

Advantageously, the display unit 1 further comprises a processor that is arranged to depict visual information on the part of the depicting side of the flexible display 2 that is projected to the additional display 20, so that energy might be saved. The depicted and projected visual information might comprise e.g. on/off status of applications, receipt of SMS messages, etc.

By the embodiment of the display unit 1 shown in Figures 7a-c, a user is offered new ways of interacting with the display unit 1, in particular if user interface actions are coupled to a partial unwrap action and the user gets lighting, touch and/or color functionality on the additional display 20.

While specific embodiments have been de scribe d above, it will be appreciated that the invention may be practiced otherwise than as described. The description is not intended to limit the invention. Any reference signs in the claims shall not be construed as limiting the scope.

## Claims

1. A display unit (1) comprising a flexible display (2) having a depicting side (4) for depicting visual information, the flexible display (2) being deformable between a storage state wherein
the flexible display (2) is in a deformed position and a depicting state wherein the depicting side (4) of the flexible display (2) is substantially flat, visible from a first exterior point of view (10) and visual information content on the depicting side (4) is controlled by a display controller,
**characterized in that** the display unit further comprises a projector for at least partially projecting the depicting side (4) of the flexible display (2) to a substantially transparent part (20) of the display unit (2) that is visible from a second exterior point of view (10),
wherein the substantially transparent part (20) of the display unit is oriented substantially transverse with respect to the depicting side of the flexible display, and
the projector comprises a mirror (18) which is oriented in a plane intersecting the depicting side (4) of the flexible display (2), so as to project a part of the depicting side of the flexible display towards the second exterior point of view via the substantially transparent part (20) of the display unit when the flexible display (2) is not in the depicting state.

2. A display unit according to claim 1, wherein the mirror (18) is oriented in a plane intersecting the partially projected depicting side (4) of the flexible display (2) with an angle of approximately 45°.

3. A display unit according to claim 1, wherein the mirror (18) is oriented in a plane intersecting the partially projected depicting side (4) of the flexible display (2) with an angle deviating from 45 °.

4. A display unit according to claim 1, wherein the mirror (18) is oriented in a plane intersecting the partially projected depicting side (4) of the flexible display (2) with an adjustable angle for enabling a zoom function in the projection.

5. A display unit according to any of the preceding claims, wherein the substantially transparent part (21) of the display unit (2) is implemented as an additional display or as a transparent element.

6. A display unit according to any of the preceding claims, further comprising an active display for displaying information that is visible from the second exterior point of view (10).

7. A display unit according to any of the preceding claims, further comprising a processor that is arranged to depict visual information content on the part of the depicting side (4) of the flexible display (2) that is projected to the substantially transparent part (21) of the display unit (2).

8. A display unit according to any of the preceding claims, wherein the flexible display (2) is wrappable and/or rollable.

9. A display unit according to claim 1, wherein the display unit (1) is further such arranged that the flexible display (2) is deformable between the storage state and the depicting state to at least one intermediate state wherein a part of the depicting side (4) of the flexible display (2) is substantially flat, is visible from a third exterior point of view (10) and visual information content of that part on the depicting side (4) is controlled by a display controller.

10. A display unit according to anyone of the preceding claims, wherein the part of the depicting side (4) of the flexible display (2) is projected to the substantially transparent part (20) of the display unit (1) when the flexible display (2) is in the storage state.

11. A display unit according to claim 9, wherein the part of the depicting side (4) of the flexible display (2) is projected to the substantially transparent part (20) of the display unit (1) when the flexible display (2) is in the at least one intermediate state.

12. A method of depicting information on a depicting side (4) of a flexible display (2) of a display unit (1), the flexible display (2) being deformable between a storage state wherein the depicting side (4) of the flexible display (2) is in a deformed position, and a depicting state wherein the depicting side (4) of the flexible display (2) is substantially flat, visible from a first exterior point of view (10), the method comprising the steps of:
- controlling visual information content on the depicting side (4) by a display controller; and
- at least partially projecting the depicting side (4) of the flexible display (2) to a substantially transparent part (20) of the display unit (1) that is visible from a second exterior point of view (10),
- wherein the substantially transparent part (20) of the display unit is oriented substantially transverse with respect to the depicting side of the flexible display, and the projector comprises a mirror (18) which is oriented in a plane intersecting the depicting side (4) of the flexible display (2), so as to project a part of the depicting side of the flexible display towards the second exterior point of view via the substantially transparent part (20) of the display unit when the flexible display (2) is not in the depicting state.

13. The method according to claim 12, wherein the part of the depicting side (4) of the flexible display (2) is projected to the substantially transparent part (20) of the display unit (1) when the flexible display (2) is in the storage state.

14. The method according to claim 12, wherein the part of the depicting side (4) of the flexible display (2) is projected to the substantially transparent part (20) of the display unit (1) when the flexible display (2) is in at least one intermediate state in which a part of the depicting side (4) of the flexible display is substantially flat, is visible from a third exterior point of view (10) and visual information contents of that part on the depicting side (4) is controlled by a display controller.

15. A computer program product comprising computer readable code causing a computer to perform the method of anyone of the claims 12 to 14 for depicting information on a depicting side (4) of a flexible display (2) of a display unit (1).

## Patentansprüche

1. Anzeigeeinheit (1), die eine flexible Anzeige (2) umfasst, die eine Darstellungsseite (4) zur Darstellung visueller Informationen aufweist, wobei die flexible Anzeige (2) verformbar ist zwischen einem Aufbewahrungszustand, in dem die flexible Anzeige (2) in einer verformten Position ist, und einem Darstellungszustand, in dem die Darstellungsseite (4) der flexiblen Anzeige (2) im Wesentlichen flach und von einem ersten externen Betrachtungspunkt (10) aus sichtbar ist, und wobei der visuelle Informationsgehalt auf der Darstellungsseite (4) durch eine Anzeigesteuerung gesteuert wird,
**dadurch gekennzeichnet, dass** die Anzeigeeinheit ferner einen Projektor umfasst, der wenigstens teilweise die Darstellungsseite (4) der flexiblen Anzeige (2) auf einen im Wesentlichen transparenten Teil (20) der Anzeigeeinheit (2) projiziert, der von einem zweiten externen Betrachtungspunkt (10) aus sichtbar ist,
wobei der im Wesentlichen transparente Teil (20) der Anzeigeeinheit im Wesentlichen quer zur Darstellungsseite der flexiblen Anzeige ausgerichtet ist, und
der Projektor einen Spiegel (18) umfasst, der in einer Ebene angeordnet ist, die die Darstellungsseite (4) der flexiblen Anzeige (2) schneidet, um einen Teil der Darstellungsseite der flexiblen Anzeige in Richtung des zweiten externen Betrachtungspunkts über den im Wesentlichen transparenten Teil (20) der Anzeigeeinheit zu projizieren, wenn die flexible Anzeige (2) sich nicht im Darstellungszustand befindet.

2. Anzeigeeinheit gemäß Anspruch 1, wobei der Spiegel (18) in einer Ebene ausgerichtet ist, die die teilweise projizierte Darstellungsseite (4) der flexiblen Anzeige (2) in einem Winkel von etwa 45° schneidet.

3. Anzeigeeinheit gemäß Anspruch 1, wobei der Spiegel (18) in einer Ebene ausgerichtet ist, die die teilweise projizierte Darstellungsseite (4) der flexiblen Anzeige (2) in einem Winkel abweichend von 45° schneidet.

4. Anzeigeeinheit gemäß Anspruch 1, wobei der Spiegel (18) in einer Ebene ausgerichtet ist, die die teilweise projizierte Darstellungsseite (4) der flexiblen Anzeige (2) in einem verstellbaren Winkel schneidet, um eine Zoomfunktion in der Projektion zu ermöglichen.

5. Anzeigeeinheit gemäß einem der vorangegangenen Ansprüche, wobei der im Wesentlichen transparente Teil (21) der Anzeigeeinheit (2) als eine zusätzliche Anzeige oder als ein transparentes Element implementiert ist.

6. Anzeigeeinheit gemäß einem der vorangegangenen Ansprüche, ferner umfassend eine aktive Anzeige zur Darstellung von Informationen, die von dem zweiten externen Betrachtungspunkt (10) aus sichtbar ist.

7. Anzeigeeinheit gemäß einem der vorangegangenen Ansprüche, ferner umfassend einen Prozessor, der ausgelegt ist, um einen visuellen Informationsgehalt auf dem Teil der Darstellungsseite (4) der flexiblen Anzeige (2) darzustellen, der auf den im Wesentlichen transparenten Teil (21) der Anzeigeeinheit (2) projiziert wird.

8. Anzeigeeinheit gemäß einem der vorangegangenen Ansprüche, wobei die flexible Anzeige (2) wickelbar und/oder aufrollbar ist.

9. Anzeigeeinheit gemäß Anspruch 1, wobei die Anzeigeeinheit (1) ferner so angeordnet ist, dass die flexible Anzeige (2) zwischen dem Aufbewahrungszustand und dem Darstellungszustand zu wenigstens einem Zwischenzustand verformbar ist, wobei ein Teil der Darstellungsseite (4) der flexiblen Anzeige (2) im Wesentlichen flach ist und von einem dritten externen Betrachtungspunkt (10) aus sichtbar ist und visueller Informationsgehalt dieses Teils auf der Darstellungsseite (4) durch eine Anzeigesteuerung gesteuert wird.

10. Anzeigeeinheit gemäß einem der vorangegangenen Ansprüche, wobei der Teil der Darstellungsseite (4) der flexiblen Anzeige (2) auf den im Wesentlichen transparenten Teil (20) der Anzeigeeinheit (1) projiziert wird, wenn die flexible Anzeige (2) sich im Aufbewahrungszustand befindet.

11. Anzeigeeinheit gemäß Anspruch 9, wobei der Teil der Darstellungsseite (4) der flexiblen Anzeige (2) auf den im Wesentlichen transparenten Teil (20) der Anzeigeeinheit (1) projiziert wird, wenn die flexible Anzeige (2) sich in dem wenigstens einen Zwischenzustand befindet.

12. Verfahren zur Darstellung von Informationen auf einer Darstellungsseite (4) einer flexiblen Anzeige (2) einer Anzeigeeinheit (1), wobei die flexible Anzeige (2) verformbar ist zwischen einem Aufbewahrungszustand, in dem die Darstellungsseite (4) der flexiblen Anzeige (2) in einer verformten Position ist, und einem Darstellungszustand, in dem die Darstellungsseite (4) der flexiblen Anzeige (2) im Wesentlichen flach und von einem ersten externen Betrachtungspunkt (10) aus sichtbar ist, wobei das Verfahren folgende Schritte umfasst:
- Steuern des visuellen Informationsgehalts auf der Darstellungsseite (4) durch eine Anzeigesteuerung; und
- wenigstens teilweises Projizieren der Darstellungsseite (4) der flexiblen Anzeige (2) auf einen im Wesentlichen transparenten Teil (20) der Anzeigeeinheit (1), der von einem zweiten externen Betrachtungspunkt (10) aus sichtbar ist,
- wobei der im Wesentlichen transparente Teil (20) der Anzeigeeinheit im Wesentlichen quer zu der Darstellungsseite der flexiblen Anzeige ausgerichtet ist, und wobei der Projektor einen Spiegel (18) umfasst, der in einer Ebene ausgerichtet ist, die die Darstellungsseite (4) der flexiblen Anzeige (2) schneidet, um einen Teil der Darstellungsseite der flexiblen Anzeige in Richtung des zweiten externen Betrachtungspunkts über den im Wesentlichen transparenten Teil (20) der Anzeigeeinheit zu projizieren, wenn die flexible Anzeige (2) sich nicht im Darstellungszustand befindet.

13. Verfahren gemäß Anspruch 12, wobei der Teil der Darstellungsseite (4) der flexiblen Anzeige (2) auf den im Wesentlichen transparenten Teil (20) der Anzeigeeinheit (1) projiziert wird, wenn die flexible Anzeige (2) sich im Aufbewahrungszustand befindet.

14. Verfahren gemäß Anspruch 12, wobei der Teil der Darstellungsseite (4) der flexiblen Anzeige (2) auf den im Wesentlichen transparenten Teil (20) der Anzeigeeinheit (1) projiziert wird, wenn die flexible Anzeige (2) sich in wenigstens einem Zwischenzustand befindet, in dem ein Teil der Darstellungsseite (4) der flexiblen Anzeige im Wesentlichen flach ist und von einem dritten externen Betrachtungspunkt (10) aus sichtbar ist und visueller Informationsgehalt dieses Teils auf der Darstellungsseite (4) durch eine Anzeigesteuerung gesteuert wird.

15. Computerprogrammprodukt, das einen computerlesbaren Code umfasst, der einen Computer veranlasst, das Verfahren nach jedem der Ansprüche 12 bis 14 zur Darstellung von Informationen auf einer Darstellungsseite (4) einer flexiblen Anzeige (2) einer Anzeigeeinheit (1)durchzuführen.

## Revendications

1. Unité d'affichage (1) comprenant un affichage souple (2) ayant un côté d'imagerie (4) pour illustrer des informations visuelles, l'affichage souple (2) étant déformable entre un état de rangement dans lequel l'affichage souple (2) est dans une position déformée et un état d'imagerie dans lequel le côté d'imagerie (4) de l'affichage souple (2) est sensiblement plat, visible depuis un premier point de vue extérieur (10) et un contenu d'informations visuelles sur le côté d'imagerie (4) est commandé par une unité de commande d'affichage,
**caractérisé en ce que** l'unité d'affichage comprend en outre un projecteur pour au moins projeter partiellement le côté d'imagerie (4) de l'affichage souple (2) sur une partie sensiblement transparente (20) de l'unité d'affichage (2) qui est visible depuis un deuxième point de visualisation extérieur (10),
dans lequel la partie sensiblement transparente (20) de l'unité d'affichage est orientée sensiblement transversalement par rapport au côté d'imagerie de l'affichage souple, et
le projecteur comprend un miroir (18) qui est orienté dans un plan intersectant le côté d'imagerie (4) de l'affichage souple (2), de manière à projeter une partie du côté d'imagerie de l'affichage souple vers le deuxième point de visualisation extérieur par l'intermédiaire de la partie sensiblement transparente (20) de l'unité d'affichage quand l'affichage souple (2) n'est pas dans l'état d'imagerie.

2. Unité d'affichage selon la revendication 1, dans lequel le miroir (18) est orienté dans un plan intersectant le côté d'imagerie (4) partiellement projeté de l'affichage souple (2) avec un angle d'approximativement 45°

3. Unité d'affichage selon la revendication 1, dans lequel le miroir (18) est orienté dans un plan intersectant le côté d'imagerie (4) partiellement projeté de l'affichage souple (2) avec un angle déviant des 45°.

4. Unité d'affichage selon la revendication 1, dans lequel le miroir (18) est orienté dans un plan intersectant le côté d'imagerie (4) partiellement projeté de l'affichage souple (2) avec un angle réglable pour permettre une fonction de zoom dans la projection.

5. Unité d'affichage selon l'une quelconque des revendications précédentes, dans laquelle la partie sensiblement transparente (21) de l'unité d'affichage (2) est mise en oeuvre sous forme d'un affichage supplémentaire ou d'un élément transparent.

6. Unité d'affichage selon l'une quelconque des revendications précédentes, comprenant en outre un affichage actif pour afficher des informations qui sont visibles depuis le deuxième point de visualisation extérieur (10).

7. Unité d'affichage selon l'une quelconque des revendications précédentes, comprenant en outre un processeur qui est agencé pour imager un contenu d'informations visuelles sur la partie du côté d'imagerie (4) de l'affichage souple (2) qui est projeté sur la partie sensiblement transparente (21) de l'unité d'affichage (2).

8. Unité d'affichage selon l'une quelconque des revendications précédentes, dans lequel l'affichage souple (2) peut être roulé et/ou enroulé.

9. Unité d'affichage selon la revendication 1, l'unité d'affichage (1) étant agencée en outre de telle sorte que l'affichage souple (2) soit déformable entre l'état de rangement et l'état d'imagerie sur au moins un état intermédiaire, dans laquelle une partie du côté d'imagerie (4) de l'affichage souple (2) est sensiblement plate, est visible depuis un troisième point de visualisation extérieur (10) et un contenu d'informations visuelles sur le côté d'imagerie (4) est commandé par une unité de commande d'affichage.

10. Unité d'affichage selon l'une quelconque des revendications précédentes, dans laquelle la partie du côté d'imagerie (4) de l'affichage souple (2) est projetée sur la partie sensiblement transparente (20) de l'unité d'affichage (1) quand l'affichage souple (2) se trouve dans l'état de rangement.

11. Unité d'affichage selon la revendication 9, dans laquelle la partie du côté d'imagerie (4) de l'affichage souple (2) est projetée sur la partie sensiblement transparente (20) de l'unité d'affichage (1) quand l'affichage souple (2) se trouve dans l'au moins un état intermédiaire.

12. Procédé d'imagerie d'informations sur un côté d'imagerie (4) d'un affichage souple (2) d'une unité d'affichage (1), l'affichage souple (2) étant déformable entre un état de rangement dans lequel le côté d'imagerie (4) de l'affichage souple (2) est dans une position déformée, et un état d'imagerie dans lequel le côté d'imagerie (4) de l'affichage souple (2) est sensiblement plat, visible depuis un premier point de visualisation extérieur (10), le procédé comprenant les étapes consistant à :
- commander un contenu d'informations visuelles sur le côté d'imagerie (4) par une unité de commande d'affichage,
- projeter au moins partiellement le côté d'imagerie (4) de l'affichage souple (2) sur une partie sensiblement transparente (20) de l'unité d'affichage (1) qui est visible depuis un deuxième point de visualisation extérieur (10),
- dans lequel la partie sensiblement transparente (20) de l'unité d'affichage est orientée sensiblement transversalement par rapport au côté d'imagerie de l'affichage souple, et le projecteur comprend un miroir (18) qui est orienté dans un plan intersectant le côté d'imagerie (4) de l'affichage souple (2), de manière à projeter une partie du côté d'imagerie de l'affichage souple vers le deuxième point de visualisation extérieur par l'intermédiaire de la partie sensiblement transparente (20) de l'unité d'affichage quand l'affichage souple (2) n'est pas dans l'état d'imagerie.

13. Procédé selon la revendication 12, dans lequel laquelle la partie du côté d'imagerie (4) de l'affichage souple (2) est projetée sur la partie sensiblement transparente (20) de l'unité d'affichage (1) quand l'affichage souple (2) se trouve dans l'état de rangement.

14. Procédé selon la revendication 12, dans lequel la partie du côté d'imagerie (4) de l'affichage souple (2) est projetée sur la partie sensiblement transparente (20) de l'unité d'affichage (1) quand l'affichage souple (2) se trouve dans au moins un état intermédiaire dans lequel une partie du côté d'imagerie (4) de l'affichage souple est sensiblement plate, est visible depuis un troisième point de visualisation extérieur (10) et le contenu d'informations visuelles de cette partie sur le côté d'imagerie (4) est commandé par une unité de commande d'affichage.

15. Produit de programme informatique comprenant un code lisible par ordinateur amenant un ordinateur à exécuter le procédé selon l'une quelconque des revendications 12 à 14 pour illustrer des informations sur un côté d'imagerie (4) d'un affichage souple (2) d'une unité d'affichage (1).
